# EUROPÄISCHE PATENTANMELDUNG

(11) **EP 4 215 355 A1**
(43) Veröffentlichungstag der Anmeldung: **26.07.2023**
(21) Anmeldenummer: 23151878.8
(22) Anmeldetag: 17.01.2023
(51) Int. Cl.: B32B 3/06, B32B 7/12, B32B 15/04, B32B 15/18, B32B 15/06, B32B 25/20, B21C 37/12, B21D 49/00

(54) **METALLBANDEINRICHTUNG UND WANDUNG EINES BEHÄLTERS, INSBESONDERE EINES SILOS, MIT EINER DERARTIGEN WENDELFÖRMIG VERLAUFENDEN METALLBANDEINRICHTUNG**

(30) Priorität: 21.01.2022 DE 102022101389
(71) Anmelder: Lipp & Mayer Technologie GmbH, 74076 Heilbronn (DE)
(72) Erfinder: Lipp, Xaver, 73479 Ellwangen (DE)
(74) Vertreter: Clemens, Gerhard

(57) **Zusammenfassung**

Eine Metallbandeinrichtung (10), die zweilagig ausgebildet ist, mit einer ersten Metallbandeinheit (12) und einer zweiten Metallbandeinheit (14), die sich in Bandlängsrichtung (L) und Bandquerrichtung (Q) erstrecken und miteinander verbunden sind, gekennzeichnet dadurch, dass die zweite Metallbandeinheit (14) benachbart und mit Abstand (A) zu Ihrem jeweiligen Längsrad (16) beidseitig oder nur einseitig zumindest eine oder mehrere in Bandlängsrichtung (L) angeordnete Einprägung/en (20) oder Sicke/n aufweist.

## Beschreibung

### TECHNISCHES GEBIET

Die vorliegende Erfindung betrifft eine Metallbandeinrichtung, die zweilagig ausgebildet ist, mit einer ersten Metallbandeinheit und einer zweiten Metallbandeinheit, die sich in Bandlängsrichtung und Bandquerrichtung erstrecken und miteinander verbunden sind.

Die vorliegende Erfindung betrifft weiterhin eine Wandung eines Behälters, insbesondere eines Silos, mit einer derartigen Metallbandeinrichtung, wobei die erste Metallbandeinheit die äußere Lage und die zweite Metallbandeinheit die innere Lage bildet, die Metallbandeinrichtung umfangsmäßig als Wendel ausgebildet ist und die unmittelbar übereinander angeordneten Abschnitte dieser Wendel jeweils einen umgekanteten Flansch aufweist, wobei die benachbarten Flansche in Form einer Falzverbindung miteinander direkt verbunden sind, wobei jeder Flansch jeweils in der oberseitigen und der unterseitigen Wendellage einen ersten innenseitigen Umkantungsbereich aufweisen.

### STAND DER TECHNIK

Das Herstellen einer Metallbandeinrichtung der eingangs genannten Art bereitet zumindest dann relativ große Fertigungsschwierigkeiten, wenn wenigstens eine der Metallbandeinheiten eine so geringe Dicke hat, das es nicht durch eine seitliche Führung möglich ist, die beiden Metallbandeinheiten für die nachfolgende Verbindung aufeinander auszurichten.

Um dieses Problem zu lösen ist in der DE 44 16 231 A1 eine Metallbandeinrichtung und ein Verfahren zum Herstellen einer derartigen Metallbandeinrichtung beschrieben, das sich dadurch auszeichnet dass die beiden Metallbandeinheiten mit gleicher Geschwindigkeit zusammengeführt werden, dass die eine Lage bildende Metallbandeinheit vor dem Zusammenführen mit der anderen Lage bildenden Metallbandeinheit mit lang gestreckten Sicken versehen wird, deren Erstreckungsrichtung zumindest eine Komponente in Bandquerrichtung aufweist, im Falle einer Tendenz der mit Sicken versehenden Metallbandeinheit von der gewünschten Ausrichtung auf die andere Metallbandeinheit quer zur Laufrichtung nach rechts oder links abzuweichen, die mit den Sicken versehende Metallbandeinheit in seiner rechten beziehungsweise linken Hälfte dadurch in Längsrichtung gestreckt wird, dass einzelne Sicken in der betreffenden Metallbandhälfte abgeflacht werden.

Eine derartige Metallbandeinrichtung ist unter dem Markennamen "Verinox" im Markt eingeführt und wird seit Jahrzehnten zur Herstellung von Silos als Wandung der eingangs genannten Art eingesetzt. Die Metallbandeinheiten werden dabei im Herstellungsprozess miteinander verklebt.

Zur Herstellung einer dichten Verbindung der innerhalb der Wandung eines Silos wendelförmig geführten Metallbandeinrichtungen werden bei der Montage des Silos benachbarte Längsränder der Metallbandeinrichtungen zu nach außen weisenden Flanschen abgekantet, die zusammengeführt werden und anschließend durch weitere Abkantungen in Form einer Falzverbindung, insbesondere Doppelfalzverbindung, dichtend miteinander verbunden werden. Dabei hat die erste Metallbandeinheit eine Dicke, beispielsweise von 3 mm, um die Tragfähigkeit und Standsicherheit des Silos zu gewährleisten.

Die innenseitig angeordnete zweite Metallbandeinheit, die als Edelstahlmetallbandeinheit ausgebildet ist, dient dazu, eine chemisch resistente Innenseite der Silowand zu bilden, so dass in dem Silo Stoffe, wie zum Beispiel Getreide, gelagert werden können, welche der menschlichen oder tierischen Nahrung dienen. Des Weiteren garantiert eine derartige Edelstahlbeschichtung einen hohen Qualitätsstandard hinsichtlich einer dauerhaften und zuverlässigen Lagerung von Schüttgütern oder Flüssigkeiten innerhalb eines Silos.

Beim Herstellen der Wandung des Silos vor Ort auf der Baustelle, die aus wendelförmig verlaufenden Metallbandeinrichtungen besteht, werden benachbarte Längsrandbereiche der Metallbandeinrichtung jeweils zu einem nach außen weisenden Flansch umgekantet, wobei diese benachbarten umgekanteten Flansche dann ineinander gefügt werden um anschließend in weiteren Umkantungsvorgängen zu einer dichtenden Falzverbindung ausgebildet zu werden.

Dabei tritt in der Praxis folgendes Problem auf. Durch die Umkantung der Flansche, in der Regel um einen Umkantungswinkel von circa 90°, treten in dem inneren Umkantungsbereich hohe Beanspruchungen bezüglich der zweilagigen Metallbandeinrichtungen auf, so dass die zweite Metallbandeinheit aufgrund der im Umkantungsbereich auftretenden hohen plastischen Verformungen und Dehnungen dazu neigt entgegen der Wirkung der Klebeverbindung wieder aufzugehen, da Kräfte auftreten, die senkrecht zur Klebeebene wirken. Dadurch ist es nicht mehr möglich, die abgekanteten Flansche benachbarter Metallbandeinheiten ineinander zu schieben, um anschließend die Falzverbindung herzustellen, so dass zusätzliche Maßnahmen ergriffen werden müssen, um die abgelöste, zurückgefederte zweite Metallbandeinheit wieder zur Anlage mit der ersten Metallbandeinheit zu bringen, damit der betreffende Flansch in den entsprechenden Gegenflansch eingeführt werden kann. Dies erfordert einen hohen Aufwand und lange Montagezeit, vermindert auch die Wirtschaftlichkeit und die dauerhaft zuverlässige dichtende Funktionalität der anschließend herzustellenden Falzverbindung.

Die Herstellung einer derartigen Falzverbindung mit abgekanteten Flanschen ist beispielsweise durch die DE 2 250 239 A (Doppelfalz-verbindung) oder EP 1 181115 B1 (Falzverbindung mit Schweißnaht) bekannt.

### DARSTELLUNG DER ERFINDUNG

Ausgehend von dem genannten Stand der Technik liegt der vorliegenden Erfindung die Aufgabe beziehungsweise technische Problem zugrunde, eine Metallbandeinrichtung anzugeben, die eine wirtschaftliche Herstellung der Metallbandeinrichtung selbst ermöglicht und die die im Stand der Technik bestehenden Probleme bezüglich einer einfachen, schnellen, sicheren und dauerhaft zuverlässigen Falzverbindung bei der Herstellung einer Wandung eines Behälters löst.

Der vorliegenden Erfindung liegt weiterhin die Aufgabe beziehungsweise das technische Problem zugrunde, eine Wandung eines Behälters, insbesondere eines Silos, der eingangs genannten Art anzugeben, die eine wirtschaftliche Montage der Wandung ermöglicht und die im Stand der Technik bekannten Probleme beim Zusammenfügen der Flansche benachbarter Metallbandeinheiten zum Ausbilden einer Falzverbindung beseitigt.

Die erfindungsgemäße Metallbandeinrichtung ist durch die Merkmale des unabhängigen Anspruchs 1 gegeben. Vorteilhafte Ausgestaltungen und Weiterbildungen sind Gegenstand der vor dem unabhängigen Anspruch 1 direkt und indirekt abhängigen Ansprüche 2 bis 15.

Die erfindungsgemäße Wandung eines Behälters, insbesondere eines Silos, ist durch die Merkmale des unabhängigen Anspruchs 16 gegeben. Vorteilhafte Ausgestaltungen und Weiterbildungen sind durch die von dem Anspruch 16 abhängigen Ansprüche gegeben.

Die erfindungsgemäße Metallbandeinrichtung, die zweilagig ausgebildet ist, mit einer ersten Metallbandeinheit und einer zweiten Metallbandeinheit, die sich in Bandlängsrichtung und Bandquerrichtung erstrecken und miteinander verbunden sind, zeichnet sich dadurch aus, dass die zweite Metallbandeinheit benachbart und mit Abstand zu Ihrem jeweiligen Längsrad beidseitig oder nur einseitig zumindest eine oder mehrere in Bandlängsrichtung angeordnete Einprägung/en oder Sicke/n aufweist.

Eine besonders bevorzugte Ausgestaltung zeichnet sich dadurch aus, dass die Einprägung/en oder Sicke/n als nutförmige Einprägung ausgebildet ist/ sind, die in Bandlängsrichtung durchgehend oder in Form einer gestrichelten Linie verläuft/verlaufen.

Eine weitere besonders vorteilhafte alternative Ausgestaltung der erfindungsgemäßen Metallbandeinrichtung zeichnet sich dadurch aus, dass die Einprägungen oder Sicken als in Bandlängsrichtung in einem vorgegebenen Rastermaß angeordnete punktförmige Einprägungen oder Sicken ausgebildet sind.

Eine besonders vorteilhafte Ausgestaltung der erfindungsgemäße Metallbandeinrichtung zeichnet sich dadurch aus, dass mehrere, insbesondere drei, unmittelbar parallel benachbart angeordnete in Bandlängsrichtung verlaufende Reihen von Einprägungen oder Sicken an der zweiten Metallbandeinheit vorhanden sind.

Dabei können in einer besonders bevorzugten Ausgestaltung die Einprägungen oder Sicken so ausgebildet sein, dass sie eine runde, insbesondere halbkreisförmige, eckige, V-förmige, U-förmige, teilkugelförmige, krallen- oder sägezahnartige, Querschnittskontur aufweisen. Insbesondere die krallen- oder sägezahnartige Ausbildung der Einprägungen gewährleistet eine gute "Beweglichkeit" beim Umformvorgang der Metallbandeinrichtung zur Ausbildung der Flansche und reduziert die Beanspruchung der zweiten Metallbandeinheit beim Umformvorgang und sorgt damit für eine sichere, dauerhaft zuverlässige Verbindung zwischen erster und zweiter Metallbandeinheit.

Dadurch, dass beabstandet zum Längsrand Einprägungen oder eingeprägte Sicken oder Kerben vorhanden sind, die bei der Ausbildung im Bereich der Umkantung der ersten inneren Umkantung der Flansche übereinander angeordnete Metallbandeinheiten vorhanden sind, hat die zweite Metallbandeinheit die Möglichkeit durch die Einprägungen beziehungsweise eingeprägten Sicken sich in dem mechanisch und geometrisch hoch beanspruchten Umkantungsbereich der Flansche zu dehnen und die beim Umkantungsvorgang auftretenden Beanspruchungen aufgrund der stark unterschiedlichen Dicken der aufeinander angeordneten Metallbandeinheiten auszugleichen, so dass die Verbindung zwischen erster und zweiter Metallbandeinheit im Bereich des abgekanteten Flansches deutlich reduzierte Kräfte senkrecht zur Verbindungsebene aufzunehmen hat, wodurch ein Aufspringen der Klebeverbindung zwischen zweiter Metallbandeinheit und erster Metallbandeinheit im abgekanteten Flanschbereich zuverlässig verhindert werden kann, wodurch eine einfache Einfügung benachbarter abgekanteter Flanschbereiche der Metallbandeinheiten zum nachfolgenden Herstellen einer dichtenden Falzverbindung gewährleistet werden kann, ohne das zusätzliche Maßnahmen erforderlich sind.

Eine besonders bevorzugte Ausgestaltung, die wirtschaftlich herstellbar ist und eine dauerhaft zuverlässige Funktion gewährleistet, zeichnet sich dadurch aus, dass die erste und zweite Metallbandeinheit durch Klebung miteinander verbunden sind.

Eine bezüglich einer wirtschaftlichen Herstellung der erfindungsgemäßen Metallbandeinrichtung besonders vorteilhafte Ausgestaltung, die bezüglich der Herstellung einer Wandung eine besonders hohe Zuverlässigkeit aufweist, zeichnet sich dadurch aus, dass im Längsrandbereich der Unterseite der zweiten Metallbandeinheit und der Oberseite der ersten Metallbandeinheit jeweils eine erste Klebeschicht vorhanden ist, und in Bandquerrichtung zwischen den ersten beiden Klebeschichten eine zweite Klebeschicht mit geringerer Klebequalität als die erste Klebeschicht oder eine Isolierfolieneinheit vorhanden ist.

Bei dieser Ausgestaltung wird der Einsatz besonders hochwertiger und teurer Klebematerialien dadurch reduziert, da diese lediglich im Randbereich eingesetzt werden, wobei im Bereich zwischen den hochwertigen Klebeschichten ein Klebematerial verwendet werden kann, das geringere Klebequalitäten aufweist und daher auch geringere Kosten verursacht, was einer wirtschaftlichen Herstellung zugute kommt. Alternativ kann die zweite Klebeschicht auch durch eine Isolierfolieneinheit ersetzt werden, die in besonders vorteilhafter Art und Weise einen möglichen Lochfras zwischen den unterschiedlichen Materialien der ersten und zweiten Metallbandeinheit unterbindet.

Eine bevorzugte Ausgestaltung, die eine wirtschaftliche Herstellung gewährleistet und in der Praxis zufriedenstellende Ergebnisse zeigt, zeichnet sich dadurch aus, dass die Einpägung/en oder Sicke/n relativ zur ersten Metallbandeinheit eine konvexe und/oder konkave Querschnittskontur aufweist/aufweisen.

Die Klebung selbst zwischen der ersten und zweiten Metallbandeinheit kann durch die Einbringung eines doppelseitigen Klebebands zwischen den beiden Metallbandeinheiten und/oder durch Aufbringung eines Klebematerials zwischen den beiden Metallbandeinheiten erfolgen.

Eine in der Praxis besonders bevorzugte und bewährte Ausgestaltung der erfindungsgemäßen Metallbandeinrichtung zeichnet sich dadurch aus, dass die erste Metallbandeinheit als Stahlblech mit einer Dicke im Bereich zwischen 2 bis 10 mm, insbesondere 3 mm, und die zweite Metallbandeinheit als Edelstahlblech mit einer Dicke im Bereich von 0,1 bis 1 mm, insbesondere 0,3 mm, ausgebildet ist.

Um beim Herstellungsprozess der Metallbandeinrichtung ein optimales Anliegen der ersten und zweiten Metallbandeinheit aufeinander zu gewährleisten, zeichnet sich eine vorteilhafte Ausgestaltung dadurch aus, dass die erfindungsgemäße Metallbandeinrichtung mit einem aus dem Stand der Technik bekannten Merkmal kombiniert werden kann, nämlich dadurch gezeichnet ist, dass die zweite Metallbandeinheit weitere Einprägungen oder eingeprägte Sicken aufweist, die in Bandlängsrichtung rasterförmig angeordnet sind und deren Erstreckungsrichtung zumindest eine Komponente in Bandquerrichtung aufweist.

Eine besonders vorteilhafte Weiterbildung, die auf eine wirtschaftliche Herstellung bezüglich einer zu erstellenden Wandung eines Silos in wendelartiger Tragstruktur der Metallbandeinrichtung zur Herstellung der Flansche, zeichnet sich dadurch aus, dass die erste und zweite Metallbandeinheit so ausgebildet ist, dass die jeweiligen Längsränder der zweiten Metallbandeinheit zu den jeweiligen Längsrändern der ersten Metallbandeinheit nach innen versetzt einen Abstand aufweisen, wobei bevorzugt die Abstände im jeweiligen Längsrandbereich unterschiedlich groß sind, da die Länge der abzukantenden Flansche - vor der Herstellung der Falzverbindung - unterschiedlich groß sind, wodurch sich beim Herstellen der Falzverbindung keinerlei Probleme ergeben.

Eine besonders bevorzugte Ausgestaltung der erfindungsgemäßen Metallbandeinrichtung zeichnet sich dadurch aus, dass zwischen der ersten Metallbandeinheit und der zweiten Metallbandeinheit eine Halte- oder Dichtschicht angeordnet ist, wobei in besonders vorteilhafter Art und Weise die Halte- oder Dichtschicht beispielsweise aus Silikon bestehen kann.

Durch das Anordnen einer zusätzlichen Halte- oder Dichtschicht werden die Verbindungsverhältnisse im Umkantungsbereich weiter stabilisiert und tragen zu einer dauerhaft zuverlässigen Verbindung bei.

Die erfindungsgemäße Wandung eines Behälters, insbesondere eines Silos, bestehend aus einer Metallbandeinrichtung der oben beschriebenen Art, wobei die erste Metallbandeinheit die äußere Lage und die zweite Metallbandeinheit die innere Lage bildet, die Metallbandeinrichtung umfangsmäßig als Wendel ausgebildet ist und die unmittelbar übereinander angeordneten Abschnitte dieser Wendel jeweils einen umgekanteten Flansch aufweisen, wobei die benachbarten Flansche in Form einer Falzverbindung miteinander direkt verbunden sind, wobei jeder Flansch jeweils in der oberseitigen und der unterseitigen Wendellage einen ersten innenseitigen Umkantungsbereich aufweist, zeichnet sich dadurch aus, dass im Bereich des ersten innenseitigen Umkantungsbereichs des Flansches/ der Flansche die Einprägungen oder Sicken der zweiten Metallbandeinheit am oberen und/oder unteren Randbereich der Metallbandeinrichtung angeordnet sind.

Dadurch, dass die Einprägungen oder Sicken der zweiten Metallbandeinheit jeweils im Bereich des ersten Umkantungsbereichs der Flansche angeordnet sind, wird die hohe Beanspruchung der zweiten Metallbandeinheit in Folge der Umkantung deutlich entspannt und das im Stand der Technik bekannte Problem des Aufspringens der zweiten Metallbandeinheit, das heißt das Lösen der beiden Metallbandeinheiten von dem umgekanteten Flansch, zuverlässig verhindert, da durch die Einprägungen oder Sicken eine "Entspannung" mit Dehnungsmöglichkeit im kritischen Umkantungsbereich erfolgt.

Besonders bevorzugt und in der Praxis bewährt, hat es sich als besonders vorteilhaft herausgestellt, die umgekanteten Flansche benachbarter Ränder der wendelförmig verlaufenden Metallbandeinrichtung als Doppelfalzverbindung auszubilden.

Die Erfindung betrifft weiterhin ein Behälter, der eine Wandung und eine wendelförmig verlaufende Metallbandeinrichtung der oben beschriebenen Art enthält.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Detaildraufsicht auf eine Metallbandeinrichtung mit einer ersten Metallbandeinheit aus dickem Stahlblech und einer darauf mittels Klebeverbindung angeordneten zweiten Metallbandeinheit als dünne Edelstahlschicht, wobei die zweite Metallbandeinheit in Längsrichtung verlaufende benachbart und beabstandet zu ihrem jeweiligen Längsrand drei Einprägungen oder Sicken aufweist und (gestrichelt dargestellt) in Querrichtung alternierend auf- und absteigende schräg verlaufende zusätzliche Einprägungen oder Sicken aufweist,
- Fig. 2: schematischer Querschnitt durch die Metallbandeinrichtung gemäß Fig. 1 in Explosionsdarstellung,
- Fig. 3a, b: schematische Längsschnittdarstellung durch die Metallbandeinrichtung gemäß Fig. 1 im nicht gekanteten Zustand (Fig. 3a) und im teilweisen gekanteten Zustand (Fig. 3b) der Flansche,
- Fig. 4: schematische Detaildarstellung im Querschnitt mit teilweise abgekanteten Flanschen im Randbereich benachbarter Metallbandeinrichtungen zur Herstellung einer Falzverbindung mit aufspringender Verbindung der zweiten Metallbandeinheit in Folge des Umkantungsvorgangs (gestrichelt dargestellt),
- Fig. 5: schematische Querschnittsdarstellung der Metallbandeinrichtung nach Fig. 1 im Zustand einer ersten Umkantung der Flansche mit gestrichelter Darstellung des Aufspringens der zweiten Metallbandeinheit im Bereich der Flansche bei bekannten Metallbandeinheiten,
- Fig. 6: schematische Seitenansicht eines Silos, hergestellt aus wendelförmig verlaufenden Metallbandeinrichtungen, deren benachbarte Randbereiche mittels einer Falzverbindung verbunden sind,
- Fig. 7: schematischer Detailquerschnitt durch eine Doppelfalzverbindung benachbarter umgekanteter Flansche der Metallbandeinrichtungen im Rahmen der Wandung des Silos gemäß Fig. 6,
- Fig. 8: schematische Darstellung einer Vorrichtung zum Herstellen einer Metallbandeinrichtung mit erster und zweiter Metallbandeinheit, die einander zugeführt werden, wobei die zweite Metallbandeinheit vor der Zusammenführung durch eine erste Prägerolleneinheit mit weiteren Einprägungen oder Sicken in Querrichtung und durch eine zweite Prägerolleneinheit mit Einprägungen oder Sicken in Längsrichtung versehen wird und vor der Zuführungs-position der Metallbandeinheiten eine Klebematerial-zuführungseinheit angeordnet ist,
- Fig. 9a-f: Detailschnitte durch den unteren Randbereich einer Metallbandeinrichtung in fortschreitenden Umkantungszuständen bis zu dem Zustand (Fig. 9e), in dem die Randbereiche benachbarter Metallbandeinrichtungen zusammengefügt werden,
- Fig. 10 a-h: Detailschnitte durch den oberen Randbereich einer Metallbandeinrichtung in fortschreitenden Umkantungszuständen bis zu dem Zustand (Fig. 10g), in dem die Randbereiche benachbarter Metallbandeinrichtungen zusammen gefügt werden,
- Fig. 11: schematischer Detailquerschnitt der zusammengefügten Randbereiche benachbarter Metallbandeinrichtungen gemäß dem Umkantungszustand von Fig. 9e und 10g vor dem endgültigen Herstellen der Doppelfalzverbindung gemäß Fig. 7,
- Fig. 12: schematische Perspektivdarstellung einer Prägestation mit zwei im Randbereich einer eingeführten Metallbandeinrichtung angeordneten zweiten Prägerolleneinheiten, jeweils mit einer oberen und unteren Prägerolle,
- Fig. 13: schematische Stirnansicht der beiden zweiten Prägerolleneinheiten mit eingeführter Metallbandeinrichtung gemäß Fig. 12 zusätzlich mit vergrößerter Darstellung des Details C,
- Fig. 14: schematische Draufsicht auf die beiden Prägerolleneinheiten mit eingeführter Metallbandeinrichtung gemäß Fig. 12,

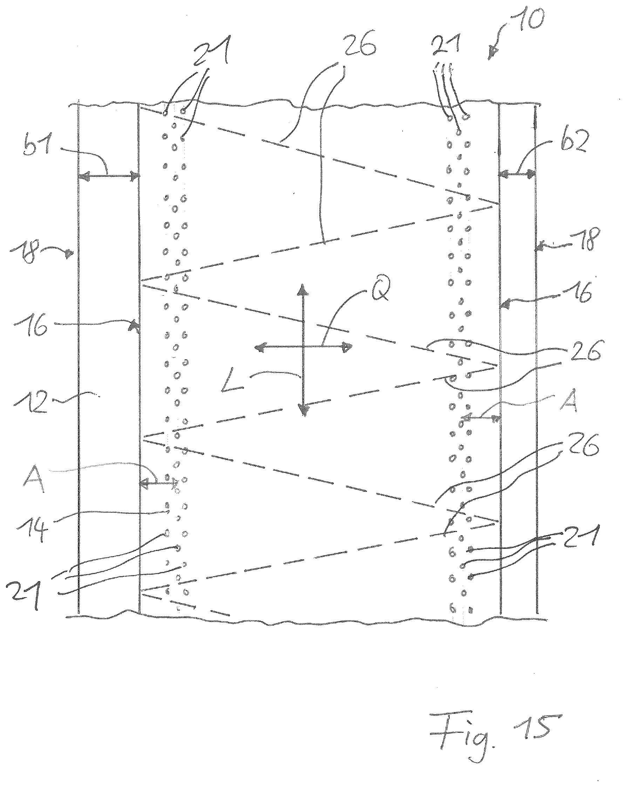

- Fig. 15: schematische Detaildraufsicht auf eine weitere konstruktive Ausführungsform einer Metallbandeinrichtung mit einer ersten Metallbandeinheit aus dickem Stahlblech und einer darauf mittels Klebeverbindung angeordneten zweiten Metallbandeinheit als dünne Edelstahlschicht, wobei die zweite Metallbandeinheit in Längsrichtung in einem vorgegebenen Raster angeordnete, benachbart und beabstandet zu ihrem jeweiligen Längsrand, drei Reihen von Einprägungen oder Sicken aufweist, die punktförmig ausgebildet sind und (gestrichelt dargestellt) in Querrichtung alternierend auf- und absteigend schräg verlaufende zusätzliche Einpägungen oder Sicken aufweist,
- Fig. 16: vergrößerte Darstellung des Details C von Fig. 13 des Kontaktbereichs der oberen Prägerolle und der unteren Prägerolle, wobei die obere Prägerolle Vorsprungeinheiten und die untere Prägerolle entsprechende Nute aufweist,
- Fig. 17: vergrößerte Darstellung eines alternativen Details C von Fig. 13 des Kontaktbereichs der oberen Prägerolle und der unteren Prägerolle, wobei die obere Prägerolle Vorsprungeinheiten aufweist und die untere Prägerolle als elastische nachgiebige Gummirolle ausgebildet ist und
- Fig. 18: vergrößerte Darstellung eines weiteren alternativen Details C von Fig. 13 des Kontaktbereichs der oberen Prägerolle und der unteren Prägerolle, wobei die obere Prägerolle rastermäßig in Längsrichtung angeordnete punktförmige Vorsprungeinheiten aufweist und die untere Prägerolle als elastische nachgiebige Gummirolle ausgebildet ist.

### WEGE ZUM AUSFÜHREN DER ERFINDUNG

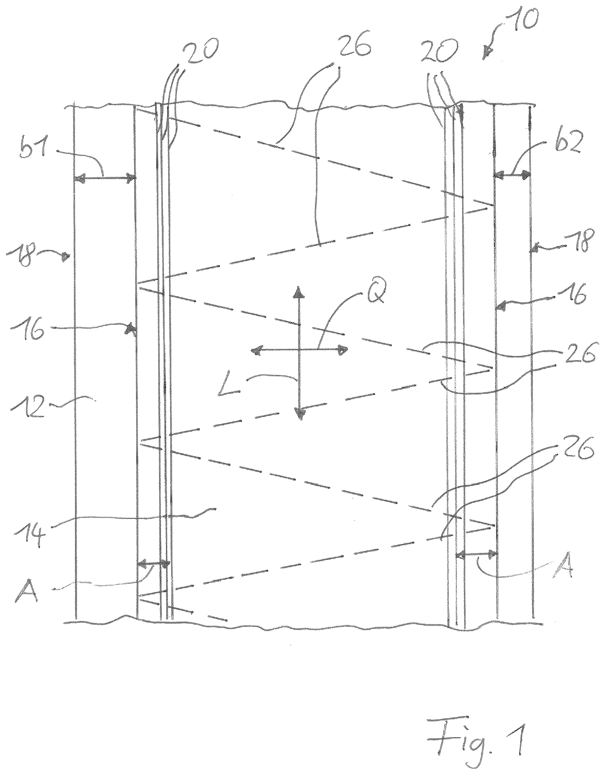

Die Fig. 1 zeigt ein Ausführungsbeispiel einer Metallbandeinrichtung 10, die zweilagig ausgebildet ist, nämlich mit einer ersten Metallbandeinheit 12, die als verzinkte Stahlblecheinheit mit beispielsweise einer Dicke von 3 mm ausgebildet ist und einer mit der ersten Metallbandeinheit 12 über eine Klebeverbindung verbundenen zweiten Metallbandeinheit 14, die als Edelstahlblech, beispielsweise mit einer Dicke von 0,3 mm, ausgebildet ist.

Die Bandlängsrichtung ist in den Figuren mit dem Bezugszeichen L und die Bandquerrichtung mit dem Bezugszeichen Q angegeben.

Die zweite Metallbandeinheit 14 ist auf der ersten Metallbandeinheit 12 derart angeordnet, dass der Längsrand 16 der zweiten Metallbandeinheit 14 in Bezug auf den Längsrand 18 der ersten Metallbandeinheit 12 nach innen versetzt, um das Abstandsmaß b1 in Fig. 1 linken Längsrandbereich und das Abstandsmaß b2 angeordnet ist. Das Abstandsmaß b1 ist dabei größer ausgebildet als das Abstandsmaß b2, was darin begründet ist, dass der Längsrandbereich der ersten Metallbandeinheit 12 zur Ausbildung eines Flansches durch Umkantung dient, wobei der jeweilige Flansch eine unterschiedliche Länge aufweist.

Die Ausbildung der Flansche durch Umkantungen wird nachfolgend beschrieben werden. Das Ergebnis der Umkantungen führt zur Ausbildung einer Falzverbindung zweier benachbarter Längsränder übereinander angeordneter Metallbandeinrichtungen 10.

Des Weiteren weist die zweite Metallbandeinheit 14 in Längsrichtung L verlaufende unmittelbar benachbart nebeneinander angeordnete drei Einprägungen 20 beziehungsweise eingeprägte Sicken auf, die in einem Abstand A zum Längsrand 16 der zweiten Metallbandeinheit 14 angeordnet sind.

Zudem besitzt die zweite Metallbandeinheit 14 weitere Quereinpägungen 26 oder Sicken, die in Längsrichtung L alternierend angeordnet sind und in Querrichtung Q alternierend aufsteigend und absteigend verlaufen (in Fig. 1 gestrichelt dargestellt).

Die Metallbandeinrichtung 10 ist dazu vorgesehen, dass sie die Wandung eines kreiszylindrischen Silos bildet, wobei beim Montageprozess zur Herstellung des Silos die Metallbandeinrichtungen 10 wendelförmig verformt werden und die benachbarten Bereiche der wendelförmig verlaufenden Metallbandeinrichtungen 10 durch Umkantungen von Flanschen mit anschließendem Herstellen einer Falzverbindung miteinander verbunden werden.

In einer nicht dargestellten Ausführungsvariante sind die Einprägungen 20 nur auf einer Längsrandseite der zweiten Metallbandeinheit 14 eingeprägt vorhanden.

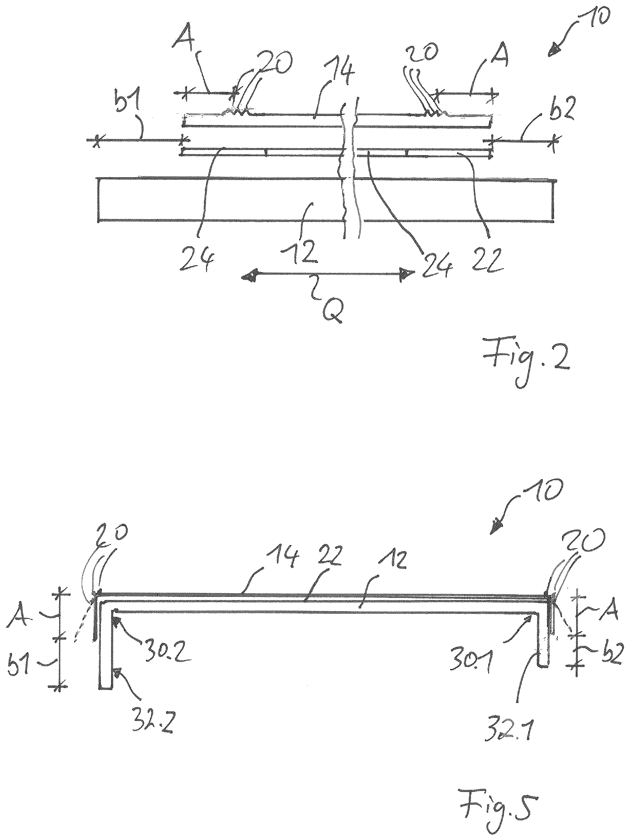

Die Fig. 2 zeigt die Metallbandeinrichtung 10 gemäß Fig. 1 im Querschnitt in einer Explosionsdarstellung.

Zwischen der ersten Metallbandeinheit 12 und zweiten Metallbandeinheit 14 sind zum Verbinden beider Einheiten 12,14 Klebemittel vorhanden, die aus einer ersten Klebeschicht 22 und einer zweiten Klebeschicht 24 bestehen, wobei die erste Klebeschicht 22 im Längsrandbereich der zweiten Metallbandeinheit 14 zwischen der Unterseite der zweiten Metallbandeinheit 14 und der Oberseite der ersten Metallbandeinheit 12 vorhanden ist. Zwischen den ersten Klebeschichten 22 im linken und rechten Längsrandbereich ist eine zweite Klebeschicht 24 vorhanden. Die zweite Klebeschicht 24 weist geringere Klebequalitäten auf als die erste Klebeschicht 22, was eine wirtschaftliche Herstellung der Metallbandeinrichtung ermöglicht, da die hochwertige erste Klebeschicht 22 relativ teuer ist und die Verbindung der beiden Einheiten im Restbereich zwischen den ersten Klebeschichten 22 durch eine kostengünstige zweite Klebeschicht 24 gewährleistet wird. Die erste Klebeschicht 22 mit ihrer hohen Klebewirkung ist im Bereich unterhalb der Einpärgungen 20 oder Sicken vorhanden, um eine dauerhafte zuverlässige Verbindung der beiden Einheiten 12,14 in diesem Bereich zu gewährleisten.

Alternativ kann die zweite Klebeschicht 24 auch durch eine Isolierfolieneinheit ersetzt werden, die den Vorteil hat, dass ein möglicher Lochfras aufgrund der unterschiedlichen Materialien der beiden Metallbandeinheiten 12,14 zuverlässig verhindert wird.

Die Fig. 5 zeigt in einem Querschnitt den Zustand, bei durch eine erste Umkantung die Flansche 32.1, 32.2 im linken beziehungsweise rechten Randbereich umgeformt vorhanden sind, um in späteren Arbeitsgängen eine Falzverbindung zwischen benachbarten Metallbandeinrichtungen 10 zu ermöglichen.

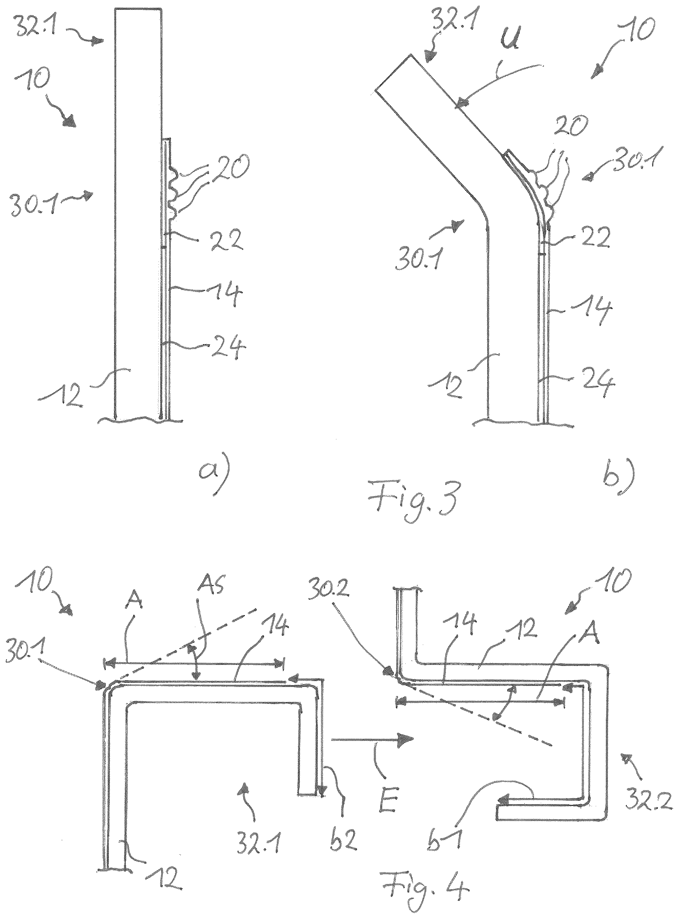

Die Fig. 3 zeigt ein Querschnittsdetail im Bereich eines inneren Umkantungsbereich 30.1 zur Ausbildung eines Flansches 32.1, wobei Fig. 3a den noch nicht umgekanteten Flanschbereich und Fig. 3b den Teilzustand einer Umformung U des Flansches 32.1 darstellt.

Die Fig. 4 zeigt den Zustand zweier Randbereiche übereinander angeordneter Metallbandeinrichtungen 10, bei denen jeweils der umgekantete Flansch 32.1, 32.2 zur nachfolgenden Bildung einer Falzverbindung bereits ausgebildet ist. Nach dem Herstellen der Umkantung neigt der Randbereich der zweiten dünnen Metallbandeinheit 14 aufgrund der sehr hohen plastischen Beanspruchung und Dehnung während des Umkantungsvorgangs dazu, sich zu lösen und aufzuspringen (Pfeil AS, gestrichelte Darstellung), da Beanspruchungen senkrecht zur Klebeebene auftreten. Dies führt dann zu Problemen dahingehend, da die in Fig. 4 links dargestellte Metallbandeinrichtung 10 in die Umkantung der in der Figur rechts dargestellten Metallbandeinrichtung 10 in Einschubrichtung E eingeschoben werden muss, um die daran anschließende Falzverbindung herstellen zu können. Daher muss bei der bekannten Metallbandeinrichtung 10 vor dem Einschieben (E) der aufgesprungene Bereich der zweiten Metallbandeinheit 14 wieder zurückgedrückt werden, um ein Einführen zu ermöglichen. Dies ist ein nicht unerheblicher Aufwand, der die Montagezeiten und den Montageaufwand erhöht beziehungsweise verlängert. Dies wird erfindungsgemäß dadurch unterbunden, indem in dem inneren Umkantungsbereich 30.1, 30.2 die Einprägungen 20 oder Sicken vorhanden sind, die eine Dehnungsmöglichkeit der zweiten Metallbandeinheit 14 in diesem Umkantungsbereich 30.1, 30.2 ermöglichen, so dass ein Aufspringen AS des Endbereiches der zweiten Metallbandeinheit 14 verhindert werden kann und die umgekanteten Längsrandbereiche der Metallbandeinrichtung 10 ohne weitere zusätzlichen Maßnahmen ineinander geschoben werden können, um die nachfolgende Ausbildung einer Falzverbindung zu ermöglichen.

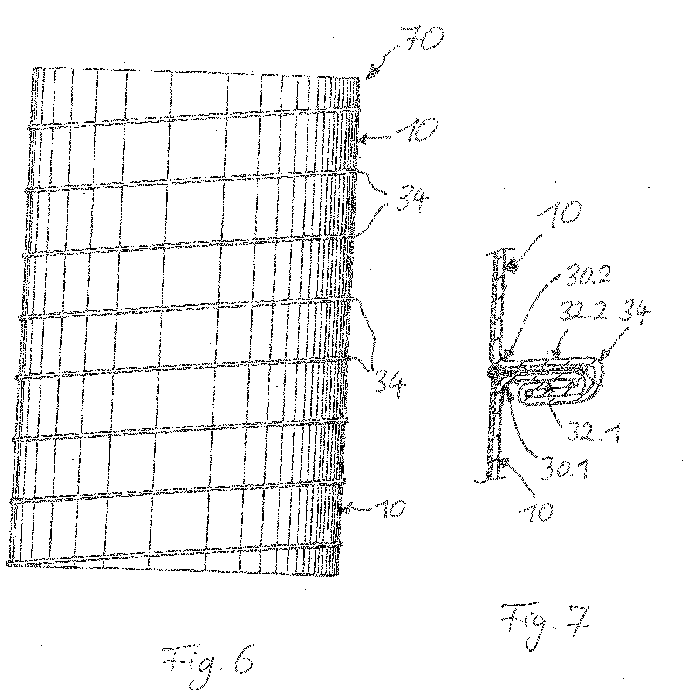

Die Fig. 6 zeigt schematisch in einer Seitenansicht ein Silo 70, dessen Wandung durch wendelförmig verlaufende Metallbandeinrichtungen 10 gebildet wird, deren benachbarte Randbereiche durch Umkantungen von Flanschen 32.1, 32.2 zur Bildung einer Falzverbindung 34 (siehe Fig. 7) dichtend verbunden werden.

Die jeweiligen Umkantungsschritte zur Herstellung einer Doppelfalzverbindung gemäß Fig. 7 sind beispielsweise in der DE 2 250 239 A beschrieben.

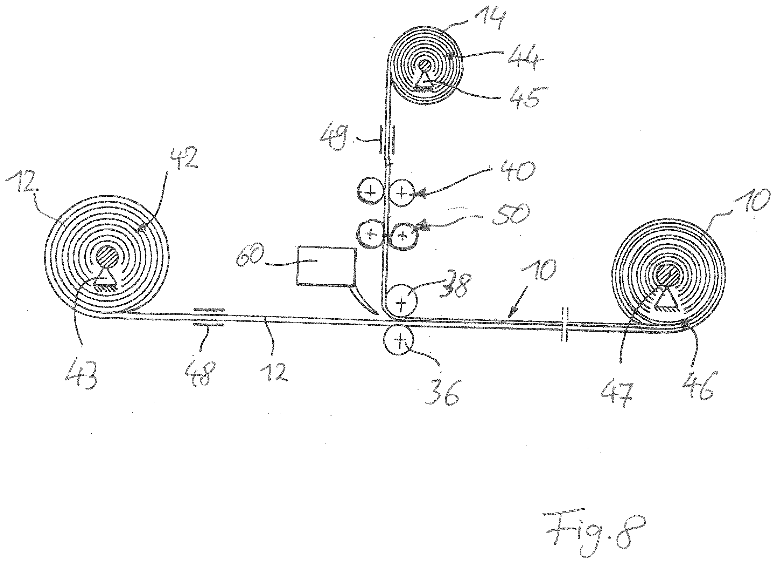

Die Fig. 8 zeigt stark schematisiert eine Vorrichtung zur Herstellung einer erfindungsgemäßen Metallbandeinrichtung 10.

Die erste Metallbandeinheit 12 ist in einem ersten Wickel 42 vorhanden, der drehbar um ein erstes Lager 43 angeordnet ist. Die zweite Metallbandeinheit 14 ist um einen zweiten Wickel 44 aufgerollt vorhanden, der drehbar um ein zweites Lager 45 angeordnet ist. Die zweilagige Metallbandeinrichtung 10 wird auf einen dritten Wickel 46 aufgerollt, der drehbar um ein drittes Lager 47 angeordnet ist. Der dritte Wickel 46 wird von einer nicht dargestellten Antriebseinheit in Drehung versetzt und zieht die erste Metallbandeinheit 12 von dem ersten Wickel 42 und gleichzeitig die zweite Metallbandeinheit 14 von dem zweiten Wickel 44 ab.

Die Bandzuführungsrichtung der ersten Metallbandeinheit 12 zur zweiten Metallbandeinheit 14 ist im dargestellten Ausführungsbeispiel rechtwinklig.

Unmittelbar nach dem ersten Wickel 42 und dem zweiten Wickel 44 ist eine auf die erste Metallbandeinheit 12 beziehungsweise die zweite Metallbandeinheit 14 einwirkende Bremseinheit 48 beziehungsweise 49 angeordnet, die dafür sorgt, dass beim Abziehen der Metallbandeinheiten 12,14 diese ständig unter Spannung stehen.

Nach der Bremseinheit 49 für die zweite Metallbandeinheit 14 ist eine erste Prägerolleneinheit 40, die die weiteren Quereinprägungen 26 beziehungsweise Sicken (mit Komponente in Bandquerrichtung Q) auf der zweiten Metallbandeinheit 14 einprägt.

Nachfolgend ist nach der ersten Prägerolleneinheit 40 eine zweite Prägerolleneinheit 50 angeordnet, die zwei in Querrichtung beabstandete Prägerolleneinheiten aufweist und die Einprägungen 20 oder Sicken in Bandlängsrichtung L in die zweite Metallbandeinheit 14 einprägen.

Die mit den Einprägungen 20 oder Sicken und den weiteren Quereinprägungen 26 oder Sicken geprägte zweite Metallbandeinheit 14 wird senkrecht zur ersten Metallbandeinheit 12 zugeführt, wobei im Zuführungsbereich unterseitig eine Stützrolle 36 und oberseitig eine Richtrolle 38 vorhanden ist. In diesem Bereich wird die erste Metallbandeinheit 12 mit der zweiten Metallbandeinheit 14 durch Klebung verbunden. Hierzu wird beispielsweise eine Klebematerialzuführungseinheit 60 eingesetzt, die unmittelbar vor der Zusammenführung der ersten Metallbandeinheit 12 und der zweiten Metallbandeinheit 14 Klebestoff auf die Oberseite der ersten Metallbandeinheit 12 aufbringt.

Die Klebematerialzuführungseinheit 60 kann alternativ auch als Doppelschichtklebefolienzuführungseinheit ausgebildet sein, die auf einem nicht dargestellten drehbaren Klebewickel gelagert ist und gleichzeitig zu der Bewegung der ersten Metallbandeinheit 12 und der zweiten Metallbandeinheit 14 im Bereich vor der ersten Stützrolle 36 und vor der Richtrolle 38 zugeführt wird.

Die im Bereich der ersten Stützrolle 36 und der Richtrolle 38 in Verbindung mit der Klebematerialzuführungseinheit 60 miteinander verbundenen Metallbandeinheiten 12,14 werden anschließend auf den dritten Wickel 46 aufgewickelt.

Nach dem Herstellungsprozess wird die Metallbandeinrichtung 10 des dritten Wickels 46 entfernt und zum Montageort verbracht, um beispielsweise ein kreiszylindrisches Silo mit wendelförmigen verlaufenden Metalleinrichtungen 10 herzustellen (siehe Fig. 6), deren benachbarte Randbereichen beim Herstellvorgang miteinander verbunden werden, insbesondere in Form einer Doppelfalzverbindung (siehe Fig. 7).

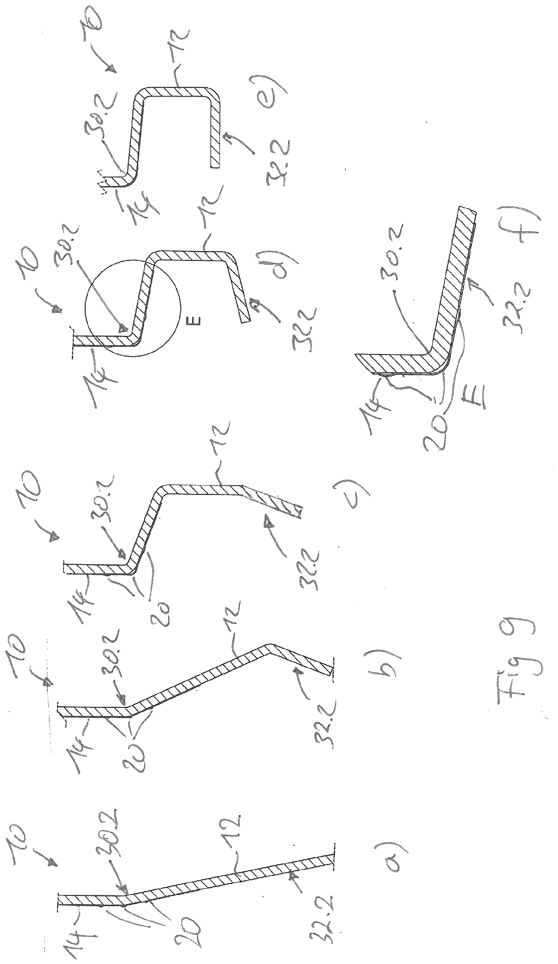

In den Figuren 9a bis f sind unterschiedliche Umkantungszustände eines unteren Randbereichs eines Flansches 32.2 einer Metallbandeinrichtung 10 in einem Detailquerschnitt dargestellt bis zu dem Umkantungszustand gemäß Fig. 9e, bei dem benachbarte umgekantete Randbereiche einer Metallbandeinrichtung 10 zusammengefügt werden.

Es ist deutlich zu erkennen, dass im Bereich des inneren Umkantungsbereichs 30.2, an dem außenseitig gegenüberliegend die Einprägungen 20 oder Sicken der zweiten Metallbandeinheit 14 angeordnet sind, aufgrund eines Umkantungswinkels von bis 90° große Dehnungen in der zweiten Metallbandeinheit 14 entstehen, die durch die Einprägungen 20 oder Sicken problemlos ausgeglichen werden können, so dass es zu keiner hohen Beanspruchung der zweiten Metallbandeinheit 14 in diesem Bereich kommt und ein Aufspringen der Verbindung zwischen der zweiten Metallbandeinheit 14 und der ersten Metallbandeinheit 12 zuverlässig verhindert wird.

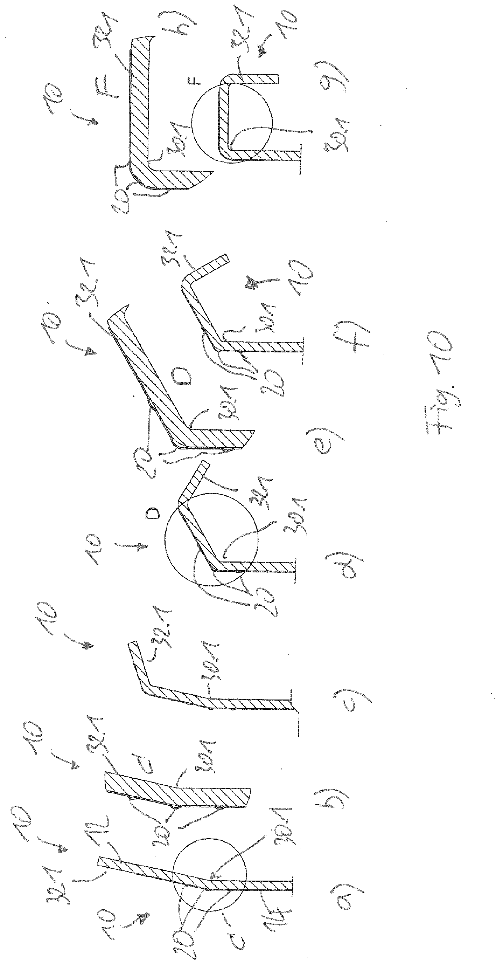

In den Figuren 10a bis h sind in einem Detailquerschnitt die fortschreitenden Umkantungszustände des oberen Randbereichs des Flansches 32.1 einer Metallbandeinrichtung 10 dargestellt, bis zu dem Zustand gemäß Fig. 10g bevor der umgekantete untere Randbereich und umgekantete obere Randbereich einer Metallbandeinrichtung 10 ineinander geschoben werden. Auch hier kommt es im Bereich des inneren Umkantungsbereichs 30.1 zu einer erhöhten Beanspruchung der zweiten Metallbandeinheit 40 aufgrund der auftretenden Dehnungsbeanspruchungen, die durch die Einprägungen 20 oder Sicken ausgeglichen werden können.

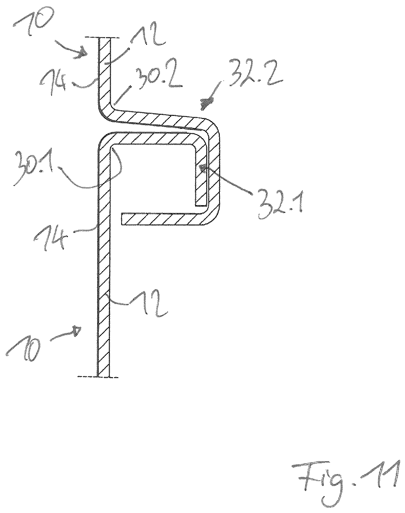

In Fig. 11 ist in einem Detailquerschnitt der zusammengefügte Zustand eines teilweise umgekanteten unteren Randbereichs einer Metallbandeinrichtung 10 und eines teilweise umgekanteten oberen Randbereichs einer Metallbandeinrichtung 10 gemäß dem Umkantungszustand von Fig. 9e und Fig. 10g dargestellt. Da durch die Einprägungen 20 oder Sicken ein Aufspringen beziehungsweise ein Lösen der zweiten Metallbandeinheit 14 vor der ersten Metallbandeinheit 12 aufgrund des Umkantungsvorgangs unterbunden wird, ist ein einfaches Einfügen der beiden Randbereiche möglich, ohne das zusätzliche Maßnahmen hinsichtlich eines zuverlässigen Einfügens ergriffen werden müssen, was im Stand der Technik des öfteren der Fall ist.

Der in Fig. 11 dargestellte Zustand der ineinander geführten Randbereiche benachbarter Metallbandeinrichtungen 10 wird nun durch weitere Umkantungsmaßnahmen fortgeführt bis der in Fig. 7 dargestellte Endzustand der Umkantungen erreicht ist, wodurch eine dichte sogenannte Doppelfalz-Verbindung vorliegt. Die Herstellung dieser Doppelfalzverbindung ist bekannt und wird daher nicht näher ausgeführt.

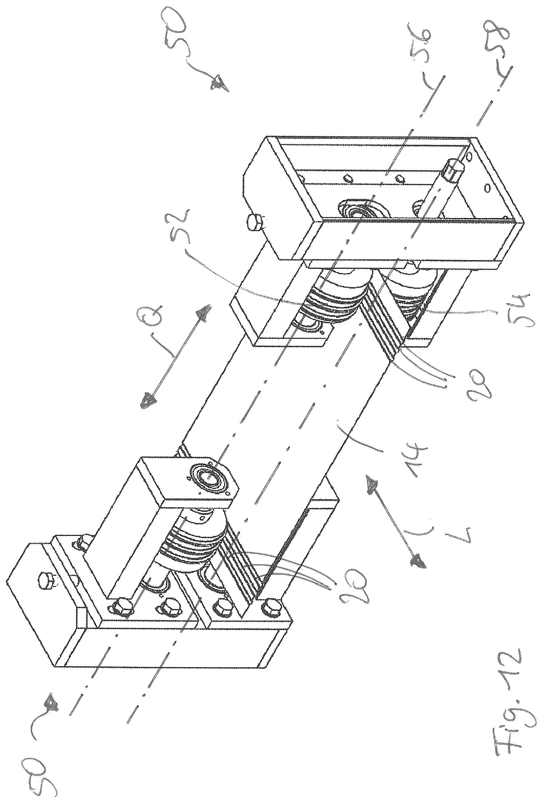

Die Fig. 12 zeigt eine schematische Perspektivdarstellung einer konstruktiven Ausführungsform der zweiten Prägerolleneinheiten 50 für die Ausbildung der in Bandlängsrichtung verlaufenden Einprägungen 20 oder Sicken der zweiten Metallbandeinheit 14, wobei die Prägerolleneinheiten 50 jeweils im Längsrandbereich einer zugeführten Metallbandeinrichtung 10 angeordnet sind.

Jede Prägerolleneinheit 50 weist eine obere Prägerolle 52 und eine untere Prägerolle 54 auf, die jeweils um eine in Querrichtung Q verlaufende Drehachse 56 beziehungsweise 58 drehbar gelagert sind. Eine oder beide Drehachsen 56 beziehungsweise 58 sind antreibbar ausgebildet. Im Ausbildungsbeispiel die Drehachse 58 der unteren Prägerolle 54.

Die obere Prägerolle 52 weist im dargestellten Ausführungsbeispiel drei in Querrichtung Q beabstandete umlaufende Vorsprungeinheiten 62 auf, die in entsprechende drei umlaufende Nuten 64 der unteren Prägerolle 54 eingreifen. Zwischen der oberen Prägerolle 52 und der unteren Prägerolle 54 wird der Längsrandbereich der Metallbandeinrichtung 10 hindurch geführt, um die Einprägungen 20 oder Sicken in Längsrichtung L auszubilden.

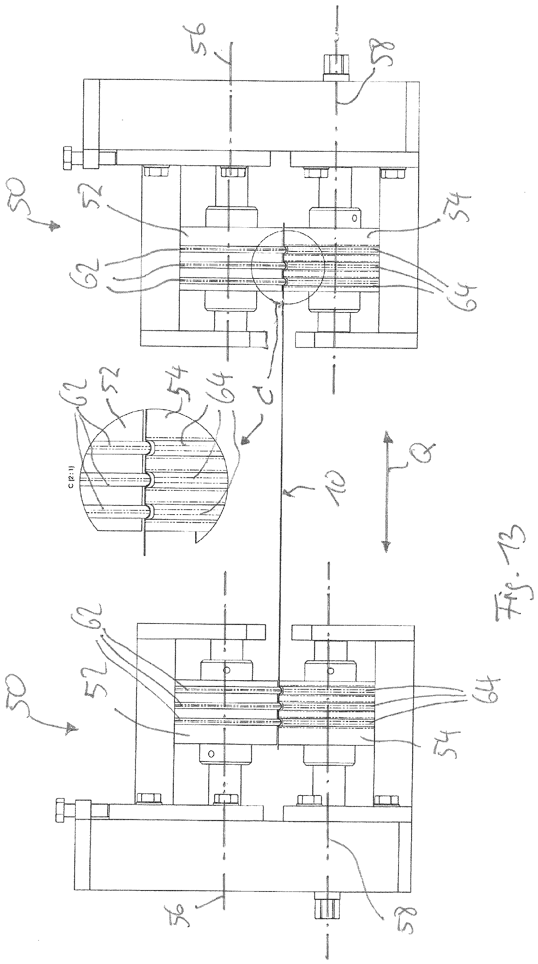

In Fig. 13 ist die konstruktive Ausführungsform gemäß Fig. 12 in einer Stirnansicht mit eingeführter Metallbandeinrichtung 10 dargestellt. Das Detail C zeigt ausschnittsweise den Kontaktbereich der oberen und unteren Prägerolle 52, 54.

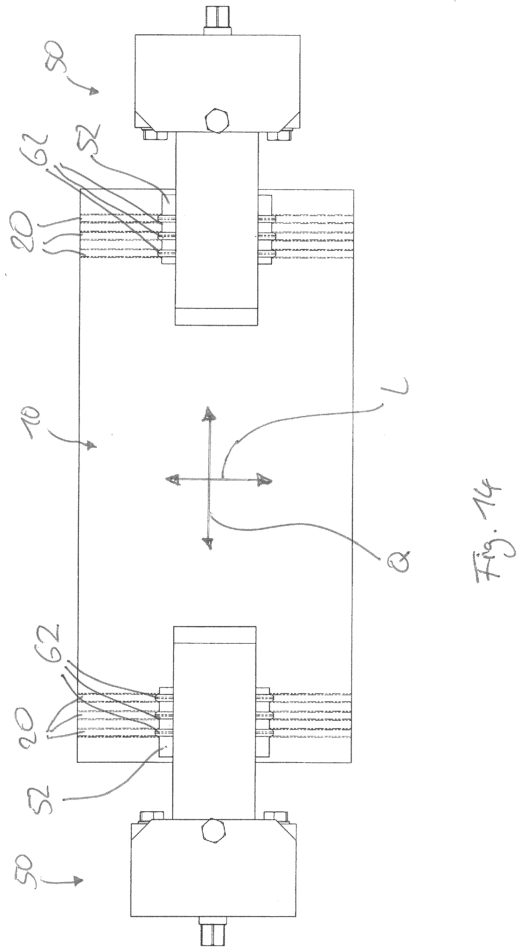

In Fig. 14 ist die konstruktive Ausführungsform der beiden zweiten Prägerolleneinheiten 50 mit eingeführter Metallbandeinrichtung 10 in einer Draufsicht dargestellt.

Die Fig. 15 zeigt ein weiteres vorteilhaftes Ausführungsbeispiel einer Metallbandeinrichtung 10, die sich in Bezug auf die Metallbandeinrichtung 10 gemäß Fig. 1 dadurch unterscheidet, dass Einpägungen 21 oder Sicken vorhanden sind, die nicht als in Längsrichtung L durchgehend verlaufende Einprägungen oder Sicken ausgebildet sind, sondern als in Längsrichtung L in einem vorgegebenen Rastermaß angeordnete punktförmige Einprägungen 21 oder Sicken ausgebildet sind, die in dem jeweiligen Randbereich in drei in Querrichtung Q beabstandet angeordneten Linien vorhanden sind, wobei die in Querrichtung Q benachbarten Einprägungen 21 oder Sicken in Längsrichtung L einen Versatz aufweisen. Durch diese punktartigen Einprägungen 21 oder Sicken im kritischen Umkantungsbereich wird eine "flächige" Nachgiebigkeit ermöglicht, die sich besonders vorteilhaft auf dem Verbund zwischen der ersten Metallbandeinheit 12 und der zweiten Metallbandeinheit 14 auswirkt. Durch diese punktförmigen Einrägungen 21 oder Sicken wird ein Aufspringen der Verbindung der zweiten Metallbandeinheit 14 beim Umkantungsvorgang zuverlässig verhindert, so dass sich die zweit Metallbandeinheit 14 im hoch beanspruchtem Umkantungsbereich dehnen kann.

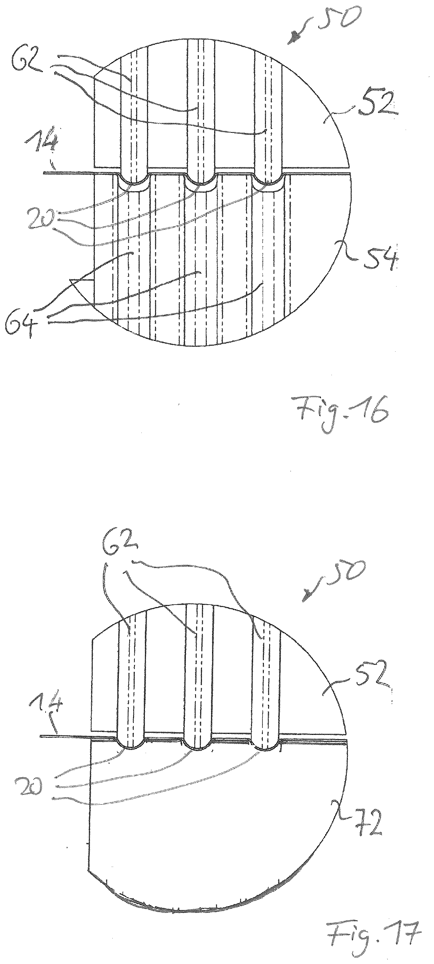

Die Fig. 16 zeigt eine vergrößerte Darstellung des Details C gemäß Fig. 13. Die obere Prägerolle 52 weist umlaufende Vorsprungeinheiten 62 auf, die in entsprechend gegenüberliegend angeordnete Nute 64 der unteren Prägerolle 54 eingreifen, wobei zwischen oberer Prägerolle 52 und untere Prägerolle 54 die Metallbandbeinrichtung 10 zugeführt wird, um die nutförmigen Einprägungen 20 oder Sicken zu erzeugen.

In einer alternativen Ausgestaltung gemäß Fig. 17 ist die untere Prägerolle 72 aus elastischem Material ausgebildet, beispielsweise Gummi, und weist keine Nuten auf. Aufgrund der elastischen Nachgiebigkeit der unteren Prägerolle 72 ist es möglich, die Einprägungen 20 oder Sicken in die zweite Metallbandeinheit 14 materialschonend einzuprägen.

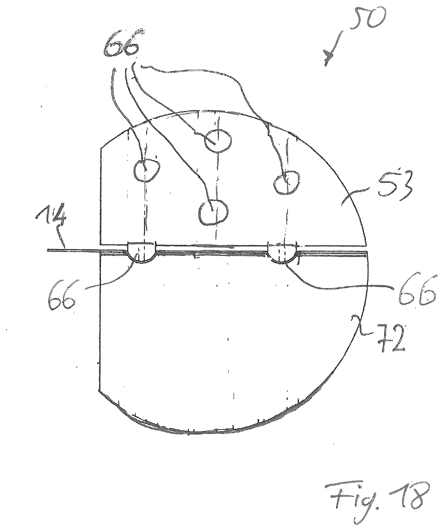

In Fig. 18 ist eine weitere konstruktive Ausgestaltung der zweiten Prägerolleneinheit 50 dargestellt. Im Unterschied zu der Prägerolleneinheit 50 gemäß Fig. 17 weist eine obere Prägerolle 53 in Umfangsrichtung drei Reihen rasterförmig beabstandeter punktförmiger Vorsprungeinheiten 66 auf, um das Prägemuster gemäß Fig. 15 in der zweiten Metallbandeinheit 14 herzustellen. Die untere Prägerolle 72 ist in diesem Ausführungsbeispiel aus elastischem Material, insbesondere Gummi, ausgebildet.

Wie in Fig. 8 dargestellt, ist in dem Zusammenführungspunkt der ersten Metallbandeinheit 12 mit der zweiten Metallbandeinheit 14 eine Klebematerialzuführungseinheit 60 vorhanden, die auf die erste Metallbandeinheit 12 einen Kleber aufbringt. Wie bereits beschrieben kann diese Klebematerialzuführungseinheit 60 auch durch eine Klebebandzuführungseinheit ersetzt werden, die ein doppelseitiges Klebeband zuführt.

In einer nicht dargestellten Ausführungsvariante sind mehrere Klebematerialzuführungseinheiten vorhanden, nämlich zwei Klebematerialzuführungseinheiten, die jeweils eine äußere Klebeschicht in dem Längsrandbereich der zweiten Metallbandeinheit 14 zuführen und eine weitere Klebematerialzuführungseinheit, die im Bereich zwischen den äußeren Klebeschichten im Randbereich eine weitere mittlere Klebeschicht zuführt, wobei sich die zugeführten Klebeschichten in ihrer Klebequaltität unterscheiden, dadurch, dass die im Randbereich aufgebrachten äußeren Klebeschichten eine höhere Klebewirkung aufweisen als die weitere Klebeschicht zwischen den beiden im Längsrandbereich aufgebrachten äußeren Klebeschichten. Eine derartige Ausgestaltung ermöglicht eine wirtschaftliche Herstellung, da die Qualität der Klebeschichten einen nicht unerheblichen Einfluss auf die wirtschaftliche Herstellbarkeit aufgrund der unterschiedlichen gewählten Klebequalitäten mit sich bringt, da die erforderlichen hohen und damit teuren Klebequalitäten im Längsrandbereich wegen der anschließenden plastischen Umformung der Randbereiche zur Bildung der Falzverbindung benachbarter Längsbereiche der Metallbandeinrichtungen 10 zur Gewährleistung einer dauerhaft zuverlässigen Funktion höhere Klebeeigenschaften gewährleisten müssen. Die mittlere weitere Klebeschicht benötigt keine derart hohen Klebequalitäten, so dass sie preislich günstiger ist.

In einer in den Figuren ebenfalls nicht dargestellten Ausführungsvariante wird eine Isolierfolienzuführungseinheit eingesetzt, die als Ersatz für die weitere zweite Klebefolienschicht im mittleren Bereich dient und zwischen den im Längsrandbereich angeordneten Klebefolien angeordnet ist. Eine derartige Isolierfolie ermöglicht einen wirtschaftlichen Einsatz und gewährleistet darüber hinaus, dass ein eventuell auftretender Lochfras aufgrund der unterschiedlichen Materialien der ersten und zweiten Metallbandeinheit 12,14 zuverlässig verhindert werden kann.

## Patentansprüche

1. Metallbandeinrichtung (10), die zweilagig ausgebildet ist, mit einer ersten Metallbandeinheit (12) und einer zweiten Metallbandeinheit (14), die sich in Bandlängsrichtung (L) und Bandquerrichtung (Q) erstrecken und miteinander verbunden sind,
- **dadurch gekennzeichnet, dass**
- die zweite Metallbandeinheit (14) benachbart und mit Abstand (A) zu Ihrem jeweiligen Längsrad (16) beidseitig oder nur einseitig zumindest eine oder mehrere in Bandlängsrichtung (L) angeordnete Einprägung/en (20, 21) oder Sicke/n aufweist.

2. Metallbandeinrichtung nach einem oder mehreren der vorstehenden Ansprüche,
- **dadurch gekennzeichnet, dass**
- die Einprägung/en oder Sicke/n als nutförmige Einprägung (20) ausgebildet ist/sind, die in Bandlängsrichtung (L) durchgehend oder in Form einer gestrichelten Linie verläuft/verlaufen.

3. Metallbandeinrichtung nach Anspruch 1,
- **dadurch gekennzeichnet, dass**
- die Einprägungen oder Sicken als in Bandlängsrichtung (L) in einem vorgegebenen Rastermaß angeordnete punktförmige Einprägungen (21) oder Sicken ausgebildet sind.

4. Metallbandeinrichtung nach einem oder mehreren der vorstehenden Ansprüche,
- **dadurch gekennzeichnet, dass**
- mehrere, insbesondere drei, unmittelbar parallel benachbart angeordnete in Bandlängsrichtung (L) verlaufende Reihen von Einprägungen (20, 21) oder Sicken an der zweiten Metallbandeinheit (12) vorhanden sind.

5. Metallbandeinrichtung nach einem oder mehreren der vorstehenden Ansprüche,
- **dadurch gekennzeichnet, dass**
- die Einprägungen (20, 21) oder Sicken eine runde, insbesondere halbkreisförmige, eckige, V-förmige, U-förmige, teilkugelförmige, krallen- oder sägezahnartige, Querschnittskontur aufweisen.

6. Metallbandeinrichtung nach einem oder mehreren der vorstehenden Ansprüche,
- **dadurch gekennzeichnet, dass**
- die erste und zweite Metallbandeinheit (12,14) durch Klebung miteinander verbunden sind.

7. Metallbandeinrichtung nach Anspruch 6,
- **dadurch gekennzeichnet, dass**
- im Längsrandbereich der Unterseite der zweiten Metallbandeinheit (14) und der Oberseite der ersten Metallbandeinheit (12) jeweils eine erste Klebeschicht (22) vorhanden ist, und in Bandquerrichtung (Q) zwischen den ersten beiden Klebeschichten (22) eine zweite Klebeschicht (24) mit geringerer Klebequalität als die erste Klebeschicht (22) oder eine Isolierfolieneinheit vorhanden ist.

8. Metallbandeinrichtung nach einem oder mehreren der vorstehenden Ansprüche,
- **dadurch gekennzeichnet, dass**
- die Einprägung/en (20, 21) oder Sicke/n relativ zur ersten Metallbandeinheit (12) eine konvexe und/oder konkave Querschnittskontur aufweist/aufweisen.

9. Metallbandeinrichtung nach Anspruch 6 oder 7,
- **dadurch gekennzeichnet, dass**
- die Klebung beziehungsweise die erste und zweite Klebeschicht (22, 24) zwischen der ersten und zweiten Metallbandeinheit (12,14) als doppelseitiges Klebeband oder als Klebematerialauftrag ausgebildet ist.

10. Metallbandeinrichtung nach einem oder mehreren der vorstehenden Ansprüche,
- **dadurch gekennzeichnet, dass**
- die erste Metallbandeinheit (12) als Stahlblech mit einer Dicke im Bereich zwischen 2 bis 10 mm (Millimeter), insbesondere 3 mm (Millimeter), und die zweite Metallbandeinheit (14) als Edelstahlblech mit einer Dicke im Bereich von 0,1 bis 1 mm (Millimeter), insbesondere 0,3 mm (Millimeter), ausgebildet ist.

11. Metallbandeinrichtung nach einem oder mehreren der vorstehenden Ansprüche,
- **dadurch gekennzeichnet, dass**
- die zweite Materialbandeinheit (14) weitere Quereinprägungen (26) oder Sicken aufweist, die in Bandlängsrichtung (L) rasterförmig angeordnet sind und deren Erstreckungsrichtung zumindest eine Komponente in Bandquerrichtung (Q) aufweist.

12. Metallbandeinrichtung nach einem oder mehreren der vorstehenden Ansprüche,
- **dadurch gekennzeichnet, dass**
- die erste und zweite Metallbandeinheit (12,14) so ausgebildet ist, dass die jeweiligen Längsränder (16) der zweiten Metallbandeinheit (14) zu den jeweiligen Längsrändern (18) der ersten Metallbandeinheit (12) nach innen versetzt einen Abstand (b1, b2) aufweisen.

13. Metallbandeinrichtung nach Anspruch 12,
- **dadurch gekennzeichnet, dass**
- die Abstände (b1, b2) im jeweiligen Längsrandbereich unterschiedlich groß sind.

14. Metallbandeinrichtung nach einem oder mehreren der vorstehenden Ansprüche,
- **dadurch gekennzeichnet, dass**
- zwischen der ersten Metallbandeinheit (12) und der zweiten Metallbandeinheit (14) eine Halte- oder Dichtschicht angeordnet ist.

15. Metallbandeinrichtung nach Anspruch 14,
- **dadurch gekennzeichnet, dass**
- die Halte- oder Dichtschicht aus Silikon besteht.

16. Wandung eines Behälters, insbesondere eines Silos (70), bestehend aus einer Metallbandeinrichtung (10) nach einem oder mehreren der vorstehenden Ansprüche, wobei die erste Metallbandeinheit (12) die äußere Lage und die zweite Metallbandeinheit (14) die innere Lage bildet, die Metallbandeinrichtung (10) umfangsmäßig als Wendel ausgebildet ist und die unmittelbar übereinander angeordneten Abschnitte dieser Wendel jeweils einen umgekanteten Flansch (32.1, 32.2) aufweisen, wobei die jeweils benachbarten Flansche (32.1, 32.2) in Form einer Falzverbindung (34) miteinander direkt verbunden sind, wobei jeder Flansch (32.1, 32.2) jeweils in der oberseitigen und der unterseitigen Wendellage einen ersten innenseitigen Umkantungsbereich (30.1, 30.2) aufweist,
- **dadurch gekennzeichnet, dass**
- im Bereich des ersten innenseitigen Umkantungsbereichs (30.1, 30.2) des Flansches/der Flansche (32.1, 32.2) die Einprägungen (20, 21) oder Sicken der zweiten Metallbandeinheit (14) am oberen und/oder unteren Randbereich der Metallbandeinrichtung (10) angeordnet sind.

17. Wandung nach Anspruch 16,
- **dadurch gekennzeichnet, dass**
- die umgekanteten Flansche (32.1, 32.2) benachbarter Ränder der wendelförmig verlaufenden Metallbandeinrichtung (10) als Doppelfalzverbindung (34) ausgebildet sind.

18. Behälter, insbesondere Silo,
- **dadurch gekennzeichnet, dass**
- der Behälter eine Wandung nach Anspruch 16 und/oder 17 aufweist.
